# EUROPEAN PATENT APPLICATION

(11) **EP 1 083 101 A2**
(43) Date of publication of application: **14.03.2001**
(21) Application number: 00119310.1
(22) Date of filing: 06.09.2000
(51) Int. Cl.: B60S 1/34, B60S 1/04

(54) **Wiper pivot and wiper apparatus**

(30) Priority: 09.09.1999 JP 25588099
(71) Applicant: JIDOSHA DENKI KOGYO KABUSHIKI KAISHA, Yokohama-city, Kanagawa-prefecture (JP)
(72) Inventor: Takamoto, Kazuo c/o Jidosha Denki Kogyo K.K., Yokohama-city,Kanagawa-prefecture (JP)
(74) Representative: Reinhard - Skuhra - Weise & Partner

(57) **Abstract**

A wiper pivot is provided with a pivot shaft, a pivot holder for holding the pivot holder turnably, and a support for supporting the pivot shaft at the predetermined position in the pivot holder and for allowing the pivot shaft to be dislocated from the predetermined position by breaking at the time when large impulsive force exceeding the predetermined value is applied on the pivot shaft from outside.

## Description

### BACKGROUND OF THE INVENTION

### 1. Field of the Invention

This invention relates to a wiper pivot and a wiper apparatus provided with such the wiper pivot for wiping a windshield of a motor vehicle to remove rain drops, dust or so by the rotational power of the electric motor.

### 2. Description of the Prior Art

As a wiper pivot for the motor vehicle, the wiper pivot has been known, which is provided with a pivot holder screwed to the inner panel of the vehicle body, a pivot shaft inserted in a shaft hole formed in the pivot holder, a wiper arm secured to the top end of the pivot shaft protruding from the outer panel of the vehicle body with a nut, and a pivot arm forming a part of a wiper linkage and combined with the base end of the pivot shaft at the position under the inner panel of the vehicle body. The pivot arm is rotatably connected to one end of a link connecting rod and another end of the link connecting rod is rotatably connected to the free end of a motor arm of which base end is combined with the output shaft of the electric motor (wiper motor). Therefore, the motor arm is rotated according to actuation of the wiper motor, the rotational motion of the motor arm is converted into a oscillatory motion of the pivot arm through the link connecting rod, and the wiper blade fitted to the wiper arm makes wiping movement on the windshield glass according to the reciprocating turn of the pivot shaft.

In the aforementioned wiper pivot, a C-shaped pin having an outside diameter larger than an inside diameter of the shaft hole of the pivot holder is fitted on the pivot shaft on the side of top end to be secured with the wiper arm, protruding from the pivot holder, and a washer having an outside diameter larger than the inside diameter of the shaft hole and an inside diameter smaller than the outside diameter of the C-shaped pin fitted on the outside of the pivot shaft between the C-shaped pin and the pivot holder. Further, the pivot arm is combined with the pivot shaft at the base end protruding from the pivot holder so as to prevent the pivot shaft to come off from the pivot holder, therefore the pivot shaft is so structured as not to move in the axial direction. In the wiper pivot having the structure of this kind, if the pivot shaft is applied with impulsive force in the axial direction, the impulsive force is received directly by the pivot holder, so that it is hardly possible to absorb energy of the impulsive force.

### SUMMARY OF THE INVENTION

This invention is made in view of the aforementioned problem of the prior art, and it is an object to provide a wiper pivot which is possible to impulsive energy at the time of receiving large impulsive force from outside, and a wiper apparatus provided with such the wiper pivot.

The wiper pivot according to this invention is characterized by comprising a pivot shaft to be turned reciprocatingly according to rotation of a wiper motor through a wiper linkage, a pivot holder for turnably supporting the pivot shaft, and a support disposed between the pivot shaft and the pivot holder for supporting the pivot shaft at a predetermined position in the pivot holder and allowing the pivot shaft to be dislocated toward the inside of the vehicle body by breaking owing to impulsive force larger than predetermined value applied on the pivot shaft.

The wiper apparatus according to this invention is characterized by comprising the aforementioned wiper pivot, a wiper motor, a wiper linkage composed of motor arm combined with an output shaft of the wiper motor, a pivot arm combined with the pivot shaft of the wiper pivot and a link connecting rod connected rotatably between the motor arm and the pivot arm, a wiper arm and a wiper blade.

In the wiper pivot and the wiper apparatus according to this invention, if large impulsive force is applied on the pivot shaft from the outside, the support is destroyed by the impulsive force, whereby the pivot shaft drops out from the pivot holder and moves toward the inside of the vehicle body. Accordingly the energy of the impulsive force is absorbed at the time of destruction of the support.

### BRIEF DESCRIPTION OF THE DRAWINGS

FIG.1 is a vertical sectional front view illustrating a wiper pivot according to an embodiment of this invention;
FIG.2 is a top view of the wiper pivot shown in FIG.1;
FIG.3 is an exploded view illustrating assembling of a pivot holder, a stopper, a spacer and a support of the wiper pivot shown in FIG.1;
FIG.4 is a vertical sectional view illustrating the wiper pivot shown in FIG.1 in a state where the support is destroyed;
FIG.5 is a front view illustrating a wiper apparatus applied with the wiper pivot shown in FIG.1;
FIG.6 is a top view of the wiper apparatus shown in FIG.5; and
FIG.7 is a perspective view illustrating the wiper apparatus shown in FIG.1 mounted on the vehicle body.

### DESCRIPTION OF PREFERRED EMBODIMENT

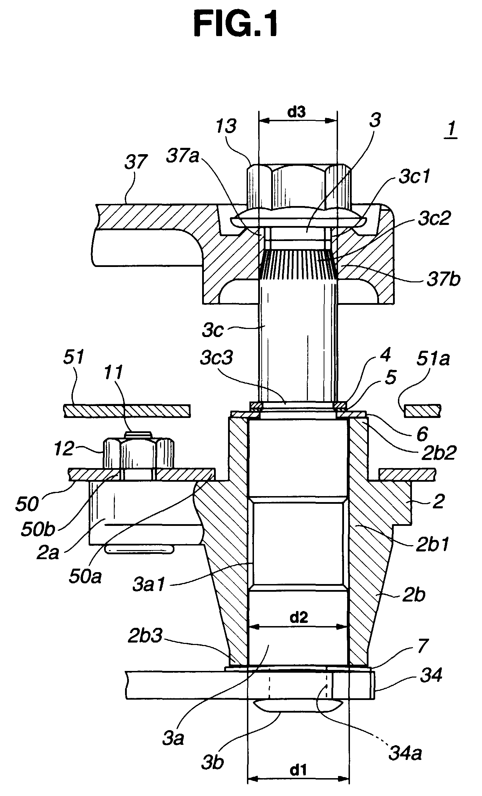

A wiper pivot and a wiper apparatus according to an embodiment of this invention will be described below on basis of FIG.1 to FIG.7.

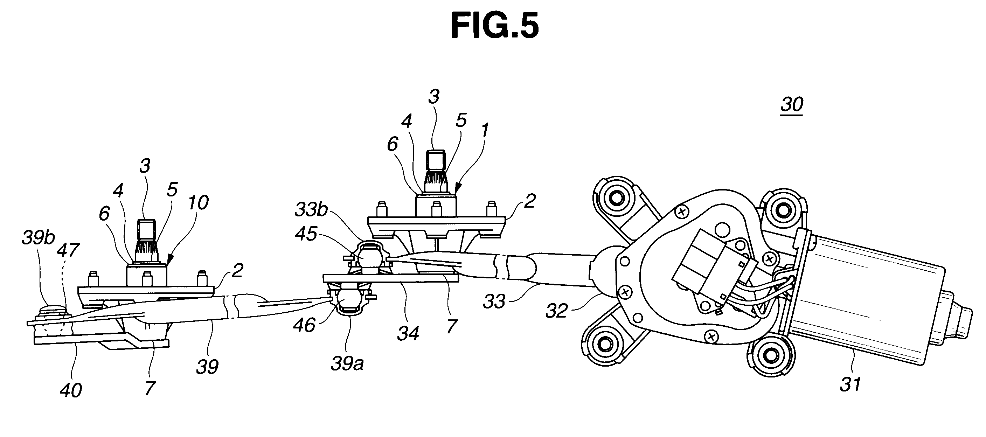

The wiper pivot 1 is composed of a pivot holder 2, a pivot shaft 3, a stopper 4, a spacer 5, a support 6 and a wave washer 7 as shown in FIGS.1 to 4, and the wiper pivot 1 is applied to a wiper apparatus 30 together with a second wiper pivot 10 having the same structure as that of the first wiper pivot 1. The wiper apparatus 30 is composed of a wiper motor 31, a motor arm 32, a first link connecting rod 33, a first pivot arm 34, the first wiper pivot 1, a first wiper arm 37, a first wiper blade 38, a second link connecting rod 39, a second pivot arm 40, the second wiper pivot 10, a second wiper arm 41 and a second wiper blade 42 as shown in FIGS.5 to 7.

The pivot holder 2 is made from resinous materials and provided with a shaft-holding part 2b to a holder base 2a having a nearly triangular plate-link shape.

The shaft-holding part 2b is formed in a cylindrical shape having a hollow passing through in the vertical direction in FIG.1 in the center of the holder base 2a, and formed with a shaft hole 2b1 with an inside diameter of d1 on the inside thereof. Furthermore, the shaft-holding part 2b is formed with a support-contact face 2b2 to the upper end in FIG.1 on the side of first wiper arm 37 and formed with a wave washer-contact face 2b3 to the lower end in FIG.1 on the side of first pivot arm 34.

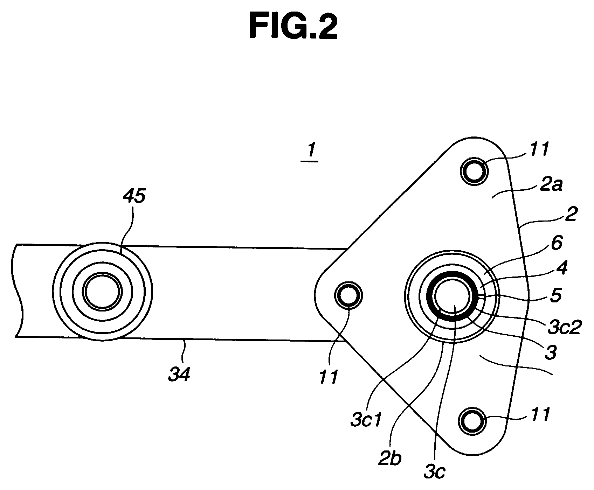

The holder base 2a of the pivot holder 2 is provided projectingly with three bolts 11 as shown in FIG.2. The holder base 2a is contacted with the lower face of an inner panel 50 such as a dash upper panel disposed on the inside of an outer panel 51 of the vehicle body by inserting the shaft-supporting part 2b of the pivot holder 2 into a round hole 50a formed in the inner panel 50 from the lower side of the inner panel 50 and inserting the bolts 11 into through holes 50b formed in the inner panel 50 at the same time, after this the pivot holder 2 is secured to the vehicle body by tightening nuts 12 onto the bolts 11 jutting out from the inner panel 50, respectively.

The pivot shaft 3 is inserted into the shaft hole 2b1 of the pivot holder 3. The pivot shaft 3 is provided with a round rod-shaped shaft body 3a. The shaft body 3a is shaped in an outside diameter of d2 slightly smaller than the inside diameter d1 of the shaft hole 2b1 of the pivot holder 2.

The shaft body 3a is formed with an oil sump 3a1 having an outer diameter smaller than d2 at the middle portion thereof, and a lubricant is enclosed between the oil sump 3a1 and the shaft hole 2b1 of the pivot holder 2.

The shaft body 3a of the pivot shaft 3 is formed with a pivot arm-fixing portion 3b at the base end thereof (lower end in FIG.1). The pivot arm-fixing portion 3b protrudes from the wave washer-contact face 2b3 of the pivot holder 2, and the first pivot arm 34 is secured to the pivot shaft 3 by caulking the base end of the shaft body 3a after inserting the protruding portion at the base end of the shaft body 3a into the wave washer 7 and a shaft-fixing hole 34a formed in the base end of the pivot arm 34.

The shaft body 3a of the pivot shaft 3 is further formed with a wiper arm-fitting axle 3c at the top end thereof (upper side of the shaft body 3a in FIG.1). The wiper arm-fitting axle 3c has an outside diameter of d3 smaller than the outside diameter d2 of the shaft body 3a.

The wiper arm-fitting axle 3c is formed with a positive screw 3c1 and a serration 3c2.

The wiper arm-fitting axle 3c of the pivot shaft 3 is disposed so as to jut out on the outside of the vehicle body from a pivot hole 51a formed in the outer panel 51 such as a cowl panel, a hood panel and so since the pivot holder 2 is fixed to the inner panel 50. The wiper arm-fitting axle 3c is combined with the base end of the first wiper arm 37 by tightening a nut 13 onto the positive screw 3c1 thereof after inserting the positive screw 3c1 into a shaft hole 37a of the wiper arm 37 and contacting the serration 3c2 with a serration receiver 37b formed in the first wiper arm 37. The first wiper arm 37 is fitted with a first wiper blade 38 at the free end thereof.

The wiper arm-fitting axle 3c of the pivot shaft 3 is also formed with a stopper groove 3c3 at a position near to the shaft body 3a. The stopper groove 3c3 is formed in the outer peripheral face of the wiper arm-fitting axle 3c and the stopper 4 is fitted into the stopper groove 3c3.

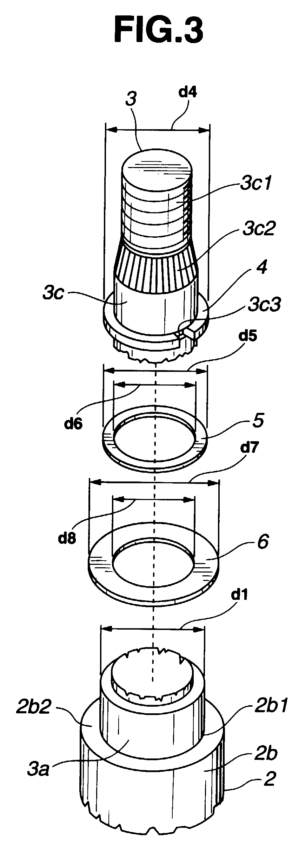

The stopper 4 is a C-shaped metallic pin as shown in FIG.3 and has an outside diameter of d4 larger than the diameter d3 of the wiper arm-fitting axle 3c and smaller than the inside diameter d1 of the shaft hole 2b1 of the pivot holder 2.

On the side of the shaft body 3a from the stopper 4 (lower side of the stopper 4 in FIG.1 or 3), the spacer 5 and the support 6 are disposed in the states of being inserted by the wiper arm-fitting axle 3c.

The spacer 5 is formed into a ringshaped thin plate from resinous materials and has an outside diameter of d5 nearly equal to the outside diameter d4 of the stopper 4 and an inside diameter of d6 slightly larger than the diameter d3 of the wiper arm-fitting axle 3c. The spacer 5 has a function to prevent the metallic stopper 4 to be in contact directly with the support 6.

The support 6 is disposed between the spacer 5 and the support-contact face 2b2 of the pivot holder 2. The support 6 is formed into a ringshaped thin plate from metallic or resinous materials so as to be destroyed at the time of being applied with the predetermined load in a direction of thickness thereof. The support 6 has an outside diameter of d7 nearly equal to the outside diameter of the shaft-holding part 2b of the pivot holder 2, that is the outside diameter of the support-contact face 2b2, and an inside diameter of d8 slightly larger than the diameter d3 of the wiper arm-fitting axle 3c and smaller than the outside diameters d4 and d5 of the stopper 4 and the spacer 5. The outside diameter d7 is larger than these of the stopper 4 and the spacer 5.

In this manner, the pivot shaft 3 is combined with the first pivot arm 34 through the wave washer 7 at the pivot arm-fixing portion 3b on the side of base end thereof, and fitted with the stopper 4 through the support 6 and the spacer 5 on the side of top end thereof. Accordingly, the pivot shaft 3 is held rotatably in the pivot holder 2 so as not to drop off from the pivot holder 2 by the first pivot holder 34 and the stopper 4. In this state, the oil sump 3a1 of the pivot shaft 3 is located in the middle of the shaft hole 2b1 of the pivot holder 2.

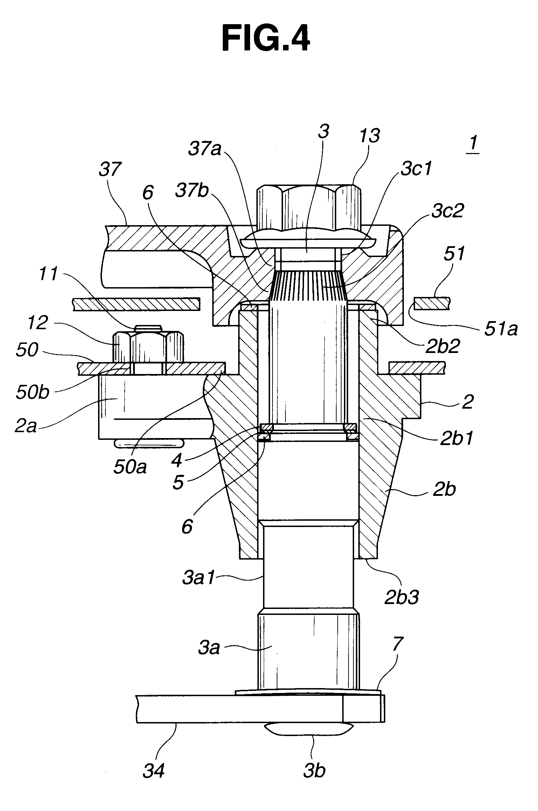

The support 6 is so designed as to be destroyed if the large impulsive force exceeding the predetermined value is applied to the wiper arm-fixing axle 3c of the pivot shaft 3 in the axial direction toward the pivot arm 34 and large shearing stress is applied to the support 6, namely the support 6 has a function for allowing the pivot shaft 3 to be dislocated from the predetermined position in the pivot holder 2 to the lower side of the outer panel 51 as shown in FIG.4. In this time, the outside diameters d4 and d5 of the stopper 4 and the spacer 5 are smaller than the inside diameter d1 of the shaft hole 2b1 of the pivot holder 2, accordingly the stopper 4 and the spacer 5 enter into the shaft hole 2b1 and the pivot shaft 3 is displaced speedily without engaging with the pivot holder 2.

According to the destruction of the support 6, the pivot shaft 3 is dislocated toward the lower side of the outer panel 51 against the pivot holder 2 as shown in FIG.4.

The second wiper pivot 10 is composed of the pivot holder 2, the pivot shaft 3, the stopper 4, the spacer 5, the support 6 and the wave washer 7 similarly to the first wiper pivot 1, the pivot shaft 3 of the second wiper pivot 10 is fixed with the base end of the second pivot arm 40 through the wave washer 7 at the base end thereof through caulking, and fixed with the second wiper arm 41 at the top end thereof by a nut. The second wiper arm 41 is fitted with the second wiper blade 42 at the free end thereof.

The wiper motor 31 is provided with an out put shaft 31a to be rotated forwardly according to current supply in the predetermined direction and rotated reversely according to current supply in the opposite direction. The wiper apparatus 30 makes wiping operation according to the forward rotation of the output shaft 31a and makes depressing operation of the wiper arms according to the reverse rotation of the output shaft 31a of the wiper motor 31.

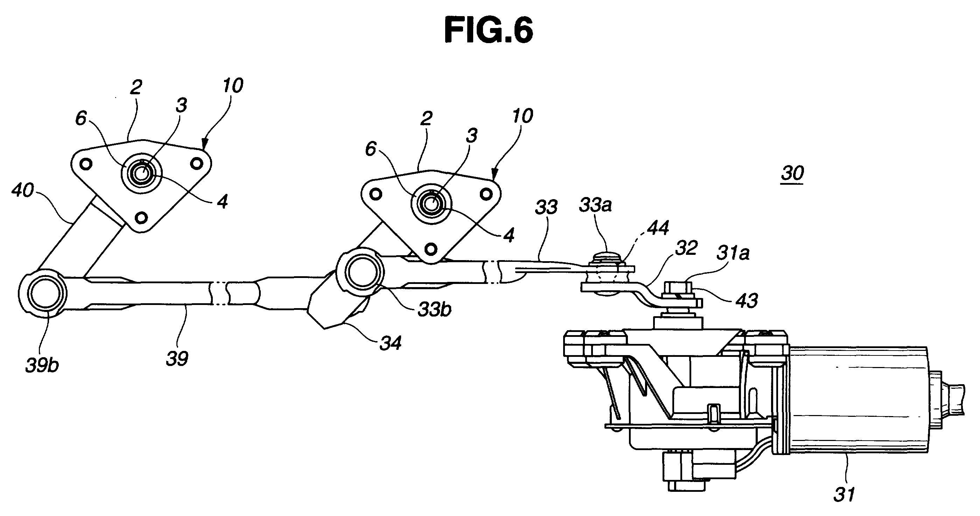

The motor arm 32 is fixed to the output shaft 31a of the wiper motor 31 by tightening a nut 43 at the base end thereof, and secured with a first ball pin 44 at the opposite end (free end) as shown in FIG.6.

The first link connecting rod 33 is provided with a first retainer 33a at one end thereof and provided with a second retainer 33b at another end thereof. The first retainer 33a of the link connecting rod 33 is connected with the first ball pin 44 of the motor arm 32 through a spherical pair. The second retainer 33b of the link connecting rod 33 is connected with a second ball pin 45 secured to the first pivot arm 34 through a spherical pair as shown in FIGS.5 and 6.

The first pivot arm 34 is secured with a second ball pin 45 at the position near to the free end on the side of inner panel 50 and secured with a third ball pin 46 at the extreme end on the reverse side of second ball pin 45. The third ball pin 46 is connected with a third retainer 39a provided to one end of the second link connecting rod 39 through a spherical pair.

The second link connecting rod 39 is provided with the third retainer 39a at one end thereof as mentioned above and provided with a fourth retainer 39b at another end thereof. The fourth retainer 39 is connected with a fourth ball pin 47 secured to the second pivot arm 40 through a spherical pair.

The wiper apparatus 30 is mounted on the vehicle body in a state where the wiper motor 31 is screwed to the inner panel 50 and connected electrically with wiring of the wiper control circuit, the first and second wiper pivots 1 and 10 are screwed on the lower face of the inner panel 50, the first and second wiper arms 37 and 41 are secured to the respective pivot shafts 3 jutting out from the outer panel 51, and the first and second wiper blades 38 and 42 are fitted to the respective wiper arms 37 and 41.

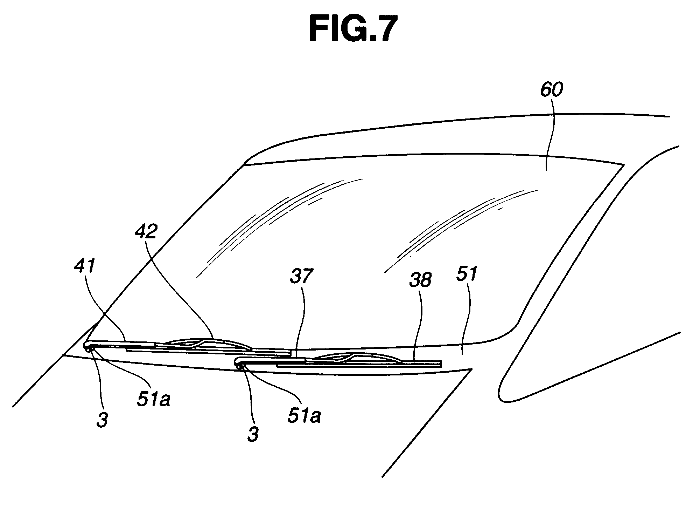

When the wiper switch provided to the wiper control circuit is switched on, the output shaft 31a of the wiper motor 31 is rotated in the forward direction and the rotation of the motor arm 31 is converted into the reciprocating turn of the first and second pivot arms 34 and 40 through the first and second link connecting rods 33 and 39. According to the reciprocating turn of the first and second pivot arms 34 and 40, the pivot shafts 3 of the first and second wiper pivots 1 and 10 are turned reciprocatingly, thereby swinging the first and second wiper arms 34 and 41, respectively on the windshield glass 60 as shown in FIG.7. Therefore, the first and second wiper blades 38 and 42 are pressed against the windshield glass 60 by arm springs housed in the wiper arms 37 and 41 and make wiping operation on the windshield glass 60.

When the wiper switch is switched off, the current supply is kept on to the wiper motor 31 through the auto-stop circuit in the wiper control circuit until the first and second wiper blades 38 and 42 return to the predetermined home positions, and the wiper blades 38 and 42 stop in the home positions by interrupting the current supply to the wiper motor 31 at the time when the wiper blades 38 and 42 arrive at the predetermined home positions, respectively.

If the pivot shaft 3 of the wiper pivot 1 or 10 happens to be applied with large impulsive force from the outside, the support 6 absorbs the impulsive force and breaks by the impulsive force, whereby the pivot shaft 3 is dislocated toward the lower side of the outer panel 51 in the pivot holder 2. Accordingly, the impulsive energy is absorbed by the destruction of the support 6.

As mentioned above, in the wiper pivot according to this invention and the wiper apparatus applied with such the wiper pivot, when the pivot shaft happens to receive the large impact from outside, the support breaks by absorbing the impulsive force, and the pivot shaft drops off from the pivot holder and is dislocated toward the inside of the vehicle body. Therefore, an excellent effect can be obtained in that it is possible to absorb energy at the time of receiving the large impulsive force.

## Claims

1. A wiper pivot for a motor vehicle comprising:
a pivot shaft to be turned reciprocatingly according to rotation of a wiper motor connected with base end thereof through a wiper linkage, top end of said pivot shaft being disposed so as to jut out from a vehicle body and attached with a wiper arm, the pivot shaft including a round rod shaped shaft body and a wiper arm-fitting axle having an outside diameter smaller than the outside diameter of the shaft body;
a pivot holder disposed to said vehicle body for turnably supporting the shaft body of said pivot shaft; and
a support disposed on the wiper arm-fitting axle of said pivot shaft for supporting the shaft body of said pivot shaft at a predetermined position in said pivot holder and allowing said pivot shaft to be dislocated toward inside of the vehicle body by breaking owing to impulsive force larger than predetermined value applied on said pivot shaft.

2. A wiper pivot as set forth in claim 1, wherein said pivot holder is formed with a shaft hole for turnably supporting the shaft body of said pivot shaft;
said pivot shaft is provided with a stopper having an outside diameter smaller than an inside diameter of the shaft hole of said pivot holder and fitted on the wiper arm-fitting axle thereof; and
said support has an outside diameter larger than said inside diameter of the shaft hole of the pivot holder and an inside diameter smaller than said outside diameter of the stopper and supports the shaft body of said pivot shaft at the predetermined position by intervening between said pivot holder and said stopper.

3. A wiper pivot as set forth in claim 2, wherein said wiper pivot is further provided with a spacer having an outside diameter smaller than said inside diameter of the shaft hole of said pivot holder and disposed around about said pivot shaft between said stopper and said support.

4. A wiper pivot as set forth in any one of claims 1 to 3, wherein said pivot holder of the wiper pivot is made of resinous material.

5. A wiper apparatus for a motor vehicle comprising:
said wiper pivot according to any one of claims 1 to 4;
a wiper motor having an output shaft to be rotated according to introduction of electric current;
a motor arm combined with the output shaft of said wiper motor at base end thereof;
a link connecting rod connected rotatably with free end of said motor arm at one end thereof;
a pivot arm connected rotatably with another end of said link connecting rod at free end thereof, base end of said pivot arm being combined with the base end of the shaft body of said pivot shaft of the wiper pivot;
a wiper arm combined to the top end of the wiper arm-fitting axle of said pivot shaft; and
a wiper blade fitted to said wiper arm.
